(19) Europäisches Patentamt
European Patent Office
Office européen des brevets

(11) **EP 3 937 636 B1**

(12) **EUROPEAN PATENT SPECIFICATION**

(45) Date of publication and mention of the grant of the patent:
**03.09.2025 Bulletin 2025/36**

(21) Application number: **20711165.9**

(22) Date of filing: **13.03.2020**

(51) International Patent Classification (IPC):
***A01N 43/16*** *(2006.01)* ***A01N 25/02*** *(2006.01)*
***A01P 7/02*** *(2006.01)* ***A01P 7/04*** *(2006.01)*

(52) Cooperative Patent Classification (CPC):
(C-Sets available)
**A01N 43/16** (Cont.)

(86) International application number:
**PCT/EP2020/056892**

(87) International publication number:
**WO 2020/182994 (17.09.2020 Gazette 2020/38)**

(54) **COMPOSITION**
ZUSAMMENSETZUNG
COMPOSITION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.03.2019 GB 201903406**

(43) Date of publication of application:
**19.01.2022 Bulletin 2022/03**

(73) Proprietor: **Certis Europe B.V.**
**3521 AZ Utrecht (NL)**

(72) Inventors:
- **BAXTER, Ian**
  **3521 AZ Utrecht (NL)**
- **MIDTHASSEL, Audun**
  **3521 AZ Utrecht (NL)**

(74) Representative: **Marks & Clerk LLP**
**15 Fetter Lane**
**London EC4A 1BW (GB)**

(56) References cited:
**WO-A1-2010/081815** **WO-A1-2016/131853**
**WO-A1-2017/024165** **RU-C1- 2 194 420**
**US-A- 5 756 140** **US-A1- 2011 224 127**
**US-A1- 2011 294 864**

- **EUROPEAN FOOD SAFETY AUTHORITY: "Conclusion on the peer review of the pesticide risk assessment of the active substance maltodextrin : Peer review of the pesticide risk assessment of the active substance maltodextrin", THE EFSA JOURNAL, vol. 11, no. 1, 1 January 2013 (2013-01-01), Parma, IT, pages 3007, XP055699408, ISSN: 1831-4732, DOI: 10.2903/j.efsa.2013.3007**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**A01N 43/16, A01N 25/02**

## Description

### INTRODUCTION

The present invention relates to the use of a composition comprising maltodextrin as a pesticide, and in particular, as an insecticide or an acaricide. The invention also relates to a method of controlling pests, e.g. insects and/or mites, comprising applying an effective amount of the composition comprising maltodextrin to an area requiring pest, e.g. insect, control.

### BACKGROUND

As pesticide resistance increases, and impacts on food production as well as, e.g. ornamental crops, there is a growing need to provide new active compounds that are effective against pests. At the same time, there is increasing scrutiny of pesticides and their potential impact on end-consumers of the crop as well as on the environment. The desire for "safe" food, all year round, is ever increasing.

As a result, there has been considerable interest in recent years in biorationals, including biopesticides, which are products with a low environmental impact. Typically biorationals are biologically-derived or, if synthetic, they are structurally and functionally similar to natural products.

Biopesticides aim to fulfil the following criteria:

- Lower chemical residues, in particular harmful residues, in the treated crops;
- Lower chemical residues in the growing environment, e.g. soil and fields and water systems;
- Delay or avoid pesticide resistance;
- Increase the spectrum of pests and diseases that can be treated;
- Meet consumer demand for "safe" food products, all year round.

EUROPEAN FOOD SAFETY AUTHORITY: "Conclusion on the peer review of the pesticide risk assessment of the active substance maltodextrin : Peer review of the pesticide risk assessment of the active substance maltodextrin", THE EFSA JOURNAL, vol. 11, no. 1, 1 January 2013 (2013-01-01), page 3007, Parma, IT ISSN: 1831-4732, DOI: 10.2903/j.efsa.2013.3007 relates to a risk assessment of a particular formulated product which comprises maltodextrin. WO 2010/081815 A1, WO 2016/131853 A1, WO 2017/024165 A1, RU 2 194 420 C1, US 5 756 140 A, US 2011/224127 A1, and US 2011/294864 A1 each relate to compositions comprising maltodextrin for a range of different applications.

### SUMMARY OF INVENTION

Viewed from a first aspect, the present invention provides use of a composition comprising:

(i) maltodextrin;
(ii) surfactant; and
(iii) water,

wherein said maltodextrin comprises at least 75 % oligosaccharides having a chain length of 3 to 7 based on the overall oligosaccharide mixture having chains of length 3 to 20, as a pesticide,
and wherein said use excludes therapeutic treatment of an animal or human body.

Viewed from a further aspect, the present invention provides the use as hereinbefore described as an insecticide or as an acaricide.

Viewed from a further aspect, the present invention provides a method of controlling pests, comprising applying an effective amount of a composition as hereinbefore described to an area requiring insect control, and wherein said method excludes therapeutic treatment of an animal or human body.

### DEFINTIONS

As used herein, the term "pesticide" refers to any substance that may be used to control (e.g. inhibit the growth of, repel and/or kill) unwanted organisms (i.e. pests) including plants, insects, animals, fungi, molluscs, arthropods, larvae, nematodes, microorganisms and algae.

As used herein, the term "insecticide" refers to a pesticide that may be used to control (e.g. inhibit the growth of, repel and/or kill) insects.

As used herein, the term "acaricides" refers to a pesticide that may be used to control (e.g. inhibit the growth of, repel and/or kill) *Acari,* including ticks and mites.

As used herein the term "maltodextrin" refers to a mixture of polysaccharides, each comprising D-glucose monomer units. Each polysaccharide present in the mixture contains 3 to 20 monomer units.

As used herein the term "chain length" refers to the number of monomer, i.e. glucose, units present in the polysaccahride.

As used herein the term "dextrose equivalent" refers to a measure of the amount of reducing sugars present in maltodextrin. It is used to characterise the molecular weight of the maltodextrin. It is measured by Layne-Eynon titration based on the reduction of copper (II) sulphate in an alkaline tartrate solution.

As used herein, the term "active ingredient" refers to any compound which is biologically active in the target organisms.

As used herein, the term "composition" refers to an administrable or useable form. Compositions often include additional ingredients other than the active ingredients, e.g. pesticide, to improve the properties of the composition e.g. to make the composition more stable and/or easier to handle, store and/or apply

DETAILED DESCRIPTION OF THE INVENTION

The present invention relates to use of a composition comprising:

(i) maltodextrin;
(ii) surfactant; and
(iii) water,

wherein said maltodextrin comprises at least 75 % oligosaccharides having a chain length of 3 to 7 based on the overall oligosaccharide mixture having chains of length 3 to 20, as a pesticide,
and wherein said use excludes therapeutic treatment of an animal or human body.

Maltodextrin is an oligosaccharide comprising (e.g. consisting of) D-glucose units. It has the repeat unit shown below:

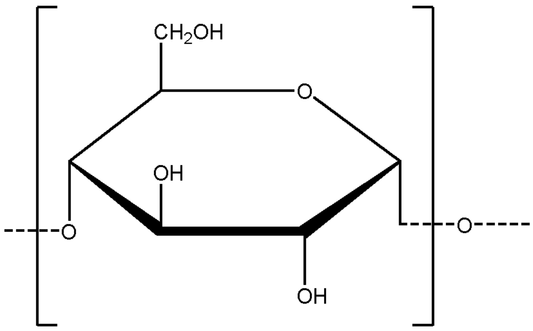

The D-glucose units may be linked by alpha ($\alpha$) and/or beta linkages, but are preferably linked by alpha ($\alpha$) linkages. The D-glucose units may be linked by (1->4) and/or (1->6) glycosidic bonds, but are preferably linked by (1->4) glycosidic bonds. Preferably the predominant linkage present in the oligosaccharides is $\alpha$-1->4 glycosidic linkages. The term chain length refers to the number of monomer (i.e. glucose) units present in the oligosaccharide. Thus a dimer has a chain length of 2, a trimer has a chain length of 3 and so on. Maltodextrin typically contains oligosaccharies having chain lengths of 3 to 20.

Maltodextrin is commercially available. Commercially available maltodextrin is generally derived from corn, potato or rice starch by hydrolysis (e.g. acid, enzyme and/or bacterial hydrolysis). The properties of the maltodextrin depend, *inter alia,* on the nature of the starch from which it is derived as well as the hydrolysis method employed. The compositions of the present invention comprise a specific maltodextrin.

The maltodextrin present in the compositions of the present invention preferably derives from corn, potato or rice starch and more preferably from rice starch. This is because rice starch inherently comprises a higher proportion of oligosaccharides having a shorter chain length (i.e. 3-7). The average chain length of the oligosaccharides present in the maltodextrin present in the compositions of the invention is preferably 4-7 and more preferably 5-6, based on the number of oligosaccharides of each chain length between 3-20 present. This is different to many commercially available maltodextrins, which tend to mainly comprise monomers and dimers, i.e. they do not predominantly comprise oligosaccharides.

The maltodextrin present in the compositions of the invention comprises at least 75 % oligosaccharides having a chain length of 3-7 based on the overall oligosaccharide mixture having chains of length 3-20. The relatively high percentage of oligosaccharides having a chain length of 3-7 in the maltodextrin is believed to be responsible for the high level of pesticidal activity demonstrated by the compositions of the invention. In preferred compositions of the present invention the maltodextrin comprises 75-100 %, more preferably 80-99 % and still more preferably 80 to 95 % oligosaccharides having a chain length of 3-7 based on the overall oligosaccharide mixture having chains of length 3-20.

Maltodextrin comprising at least 75 % oligosaccharides having a chain length of 3-7 based on the overall oligosaccharide mixture having chains of length 3-20 comprises a relatively high amount of shorter chain oligosaccharides compared to the overall range of chain lengths present in the oligosaccharide mixture. Preferably the percentage or proportion of oligosaccharides of any given chain length present in maltodextrin is determined by high performance liquid chromatography (HPLC), preferably HPLC with evaporative light scattering detection (ELSD) and still more preferably by the method described in the examples section herein. This method detects the number of molecules of each chain length present. Thus maltodextrin comprising at least 75 % oligosaccharides having a chain length of 3-7, based on the overall oligosaccharide mixture having chains of length 3-20, refers to maltodextrin having at least 75 % of its molecules being of chain length 3-7 based on the total number of oligosaccharide molecules present.

Preferably the maltodextrin present in the compositions of the invention comprises a mixture of oligosaccharides having a chain length of 3, 4, 5, 6 and 7. Preferably at least some oligosaccharide of each of the chain lengths 3, 4, 5, 6 and 7 is present.

As hereinbefore described it is thought that the presence of a relatively high percentage of oligosaccharides having a chain length of 3-7 in the maltodextrin is responsible for the high level of pesticidal activity. More specifically, and without wishing to be bound by theory, it is thought that the greater ability of the oligosaccharides having a chain length of 3-7 compared to longer chain oligosaccharides to irreversibly absorb water may be responsible for the higher level of pesticidal activity observed via a dehydration mechanism.

Preferably the maltodextrin present in the compositions of the invention comprises at least 10 % of oligosaccharide having a chain length of 3 based on the overall oligosaccharide mixture having chains of length 3-20. More preferably the maltodextrin comprises 10-25 % and still more preferably 15-20 % of oligosaccharide having a chain length of 3 based on the overall oligosaccharide mixture having chains of length 3-20.

Preferably the maltodextrin present in the compositions of the invention comprises at least 7.5 % of oligosaccharide having a chain length of 4 based on the overall oligosaccharide mixture having chains of length 3-20. More preferably the maltodextrin comprises 7.5-25 % and still more preferably 10-15 % oligosaccharide having a chain length of 4 based on the overall oligosaccharide mixture having chains of length 3-20.

Preferably the maltodextrin present in the compositions of the invention comprises at least 7.5 % of oligosaccharide having a chain length of 5 based on the overall oligosaccharide mixture having chains of length 3-20. More preferably the maltodextrin comprises 7.5-25 % and still more preferably 7.5-15 % oligosaccharide having a chain length of 5 based on the overall oligosaccharide mixture having chains of length 3-20.

Preferably the maltodextrin present in the compositions of the invention comprises at least 10 % of oligosaccharide having a chain length of 6 based on the overall oligosaccharide mixture having chains of length 3-20. More preferably the maltodextrin comprises 10-30 % and still more preferably 15-25 % oligosaccharide having a chain length of 6 based on the overall oligosaccharide mixture having chains of length 3-20.

Preferably the maltodextrin present in the compositions of the invention comprises at least 10 % of oligosaccharide having a chain length of 7 based on the overall oligosaccharide mixture having chains of length 3-20. More preferably the maltodextrin comprises 10-25 % and still more preferably 15-20 % oligosaccharide having a chain length of 7 based on the overall oligosaccharide mixture having chains of length 3-20.

Preferably the maltodextrin present in the compositions of the present invention comprises less than 25 % of oligosaccharides having a chain length of 8-20 based on the overall oligosaccharide mixture having chains of length 3-20. More preferably the maltodextrin comprises 0-25 %, still more preferably 0-20 % and yet more preferably 0-10 % of oligosaccharides having a chain length of 8-20 based on the overall oligosaccharide mixture having chains of length 3-20.

Preferably the maltodextrin present in the compositions of the present invention comprise less than 5 % of oligosaccharides having a chain length of 13-20 based on the overall oligosaccharide mixture having chains of length 3-20. More preferably the maltodextrin comprises 0-5 % of oligosaccharides and still more preferably 0-3 % oligosaccharides having a chain length of 13-20 based on the overall oligosaccharide mixture having chains of length 3-20.

Preferably the maltodextrin present in the compositions of the present invention comprises 0-5 % and more preferably 0-2.5 % of monomer, especially glucose, based on the overall oligosaccharide mixture having chains of length 1-20.

Preferably the maltodextrin present in the compositions of the present invention comprises 0-15 % and more preferably 0-10 % of dimer, especially maltose, based on the overall oligosaccharide mixture having chains of length 1-20.

Another way in which the structure of maltodextrin is characterised is by its dextrose equivalent (DE). The theoretical defintion of DE is:

$$DE = 100 \times (MW\ of\ glucose\ (i.e.\ 180)/M_n),$$

wherein $M_n$ is the number average molecular weight of the sample.

It can be seen from this equation that the higher the molecular weight of the sample, i.e. the longer the chain length of the oligosaccharide, the lower DE will be. Preferably the maltodextrin present in the compositions of the present invention has a DE of 12-40, more preferably 12 to 36 and still more preferably 20 to 36. Preferably DE is measured according to the method described above.

The pesticidal composition may comprise, preferably may consist of: maltodextrin; surfactant; and water, wherein the maltodextrin has a dextrose equivalent of 20-36.The maltodextrin comprises at least 75 % oligosaccharides having a chain length of 3-7 based on the overall oligosaccharide mixture having chains of length 3-20. In more preferred compositions of the present invention the maltodextrin comprises 75-100 %, more preferably 80-99 % and still more preferably 80 to 95 % oligosaccharides having a chain length of 3-7 based on the overall oligosaccharide mixture having chains of length 3-20.

In preferred compositions of the present invention the number average molecular weight (Mn) of the maltodextrin is 540-3600 g/mol, more preferably 720-1260 g/mol and still more preferably 900-1080 g/mol. Mn is preferably determined by gel permeation chromatography.

The composition of the present invention comprises a surfactant. Any conventional surfactant may be used. The surfactant may be selected from anionic surfactants, cationic surfactants, zwitterionic surfactants, non-ionic surfactants and mixtures thereof. Preferably, however, the surfactant is a non-ionic surfactant.

Representative examples of preferred non-ionic surfactants include polyoxyethylene fatty esters (e.g. polysorbate 80 [poly(oxyethylene)sorbitan monooleate], polysorbate 60 [poly(oxyethylene)sorbitan monostearate], polysorbate [poly(oxyethylene)sorbitan monopalmitate], poly(oxyethylene)sorbitan monolaurate, poly(oxyethylene)sorbitan trioleate and polysorbate 65 [poly(oxyethylene)sorbitan tristearate]), polyoxyethylene hydrogenated castor oils (e.g. polyoxyethylene hydrogenated castor oil 10, polyoxyethylene hydrogenated castor oil 40, polyoxyethylene hydrogenated castor oil 50 and polyoxyethylene hydrogenated castor oil 60), polyoxyethylene polyoxypropylene glycols (e.g. Pluronic F68, Pluronic P123, Pluronic P85, Pluronic F127 and Pluronic L-44), polyoxyl 40 stearate and sucrose fatty esters.

In preferred compositions of the present invention the surfactant is a polyoxyethylene fatty ester. Still more preferably the surfactant is selected from polysorbate 80 (e.g. Tween® 80), polysorbate 60 (e.g. Tween® 60) and mixtures thereof.

Preferred compositions of the present invention are in the form of a dispersion, a suspension or a solution. More preferably the compositions are in the form of a solution.

The composition is preferably provided in the form of a concentrate. When supplied in the form of a concentrate, the composition preferably comprises 175-525 g/L of maltodextrin, more preferably 260-435 g/L maltodextrin and still more preferably 315-385 g/L maltodextrin. When supplied in the form of a concentrate, the composition preferably comprises 0.02-20 % w/v of surfactant, more preferably 0.1-10 % w/v surfactant and still more preferably 3-5 % w/v surfactant, based on the total volume of the composition. When supplied in the form of a concentrate, the composition preferably comprises 20-95 % w/v of water, more preferably 50-85 % w/v water and still more preferably 60-75 % w/v water, based on the total volume of the composition.

When supplied in the form of a concentrate, the composition is preferably diluted with water prior to use. Preferably the amount of concentrate 0.1-10 %vol, more preferably 0.5 to 5 %vol and still more preferably 1.5 to 2.5 %vol, based on the volume of water. In ready-to-use form, the composition of the invention preferably comprises 0.01-10 g/L of maltodextrin, more preferably 0.1-5 g/L maltodextrin and still more preferably 0.8-1.0 g/L maltodextrin. In ready-to-use form the compositions of the invention preferably comprise 0.01-1.00 % w/v of surfactant, more preferably 0.01-0.4 % w/v of surfactant and still more preferably 0.1-0.2 % w/v of surfacant, based on the total volume of the composition. In ready-to-use form the composition of the invention preferably comprises 80-99.9 % w/v water, more preferably 90-99 % w/v water and still more preferably 95-98 % w/v water, based on the total volume of the composition.

When the composition of the invention is in ready-to-use form, it preferably has a rotational viscosity at 20 °C of 80 to 150mPa.s and more preferably 90 to 120 mPa.s. Still more preferably the composition of the invention, in ready-to-use form has a rotational viscosity at 40 °C of 25 to 75 mPa.s and more preferably 40 to 60 mPa.s. This enables the composition to be readily sprayed, e.g. onto crops, using conventional spraying apparatus.

In some preferred compositions of the invention maltodextrin is the sole active ingredient.

Alternatively, the compositions of the present invention optionally comprise one or more additional ingredients. The one or more additional ingredients may comprise one or more further active ingredients, one or more non-active ingredients or a combination thereof.

When a further active ingredient is present in the composition of the invention, it is preferably another insecticide and/or an acaricide. Representative examples of insecticides include chlorpyrifos, carbofuran, fibronil, abamectin, acephate, acetamiprid, acrinathrin, cypermethrin, endosulfan, azadirachtin, azinphos-ethyl, azinphos-methyl, *Beauveria bassiania,* bendiocarb, benfuracarb, bensultap, Cry toxins, cyfluthrin, cypermethrin, bifenthrin, bufencarb, buprofezin,

butacarb, cadusafos, carbaryl, carbofuran, carbosulfan, cartap, cartap hydrochloride, chlorantraniliprole, chlorfenapyr, chlorfenvinphos, chlorfluazuron, chlormephos, chlorpyrifos, chlorpyrifos-methyl, chromafenozide, clothianidin, cyantraniliprole, cyfluthrin, cyhalothrin, cypermethrin, deltamethrin, diazinon, dicrotophos, diflubenzuron, dimethoate dinotefuran, disulfoton, emamectin, emamectin benzoate, endosulfan, endothion, endrin, EPN, esfenvalerate, etaphos, ethiofencarb, ethion, ethiprole, ethoate-methyl, etofenprox, fenamiphos, fenazafior, fenethacarb, fenitrothion, fenobucarb, fenpropathrin, fensulfothion, fenthion, fenthion-ethyl, fenvalerate, fipronil, flonicamid, flubendiamide, flucythrinate, fonofos, fufenozide, furathiocarb, gamma- cyhalothrin, gamma-RCR, halfenprox, halofenozide, heptenophos, hyquincarb, imidacloprid, indoxacarb, isazofos, isobenzan, isocarbophos, isofenphos, isofenphos-methyl, isoprocarb, isothioate, isoxathion, kinoprene, cyhalothrin, lepimectin, lufenuron, malathion, *Metarhizium anisopliae, Metarhizium brunneum,* methamidophos, methomyl, methoxyfenozide, mevinphos, mexacarbate, milbemectin, monocrotophos, nitenpyram, novaluron, omethoate, oxamyl, oxydemeton-methyl, oxydeprofos, oxydisulfoton, parathion, parathion-methyl, penfluron, permethrin, phenthoate, phorate, phosalone, phosfolan, phosmet, phosphamidon, pirimetaphos, pirimicarb, pirimiphos-ethyl, pirimiphos-methyl, primidophos, profenofos, profluthrin, promecarb, propaphos, propoxur, prothiofos, pymetrozine, pyrafluprole, pyridalyl, pyrifluquinazon, pyriprole, pyriproxyfen, spinetoram, spinosad, spirotetramat, sulfoxaflor, sulprofos, tau-fluvalinate, tebufenozide, tebufenpyrad, teflubenzuron, tefluthrin, tetramethylfluthrin, theta-cypermethrin, thiacloprid, thiamethoxam, thicrofos, thiocyclam, thiocyclam oxalate, thiodicarb, thiometon, thiosultap, thiosultap-disodium, thiosultap-monosodium, thuringiensin, tolfenpyrad, triazophos, triflumuron, zeta-cypermethrin and mixtures thereof.

Representative examples of acaricides include permethrin, ivermectin, dicofol, abamectin, acequinocyl, bifenazate, chlorpenafyr, clofentezine, cyflumetofen, cypermethrin, dicofol, etoxazole, fenazaquin, fenpyroximate, hexythiazox, imidacloprid, propargite, pyridaben, spiromesifen, spirotetramat and mixtures thereof.

When a further active ingredient is present in the composition of the invention, it is preferably present in an amount that will provide pesticidal activity. The skilled person will readily be able to determine such an amount. In preferred compositions of the present invention, however, maltodextrin is the sole active ingredient present.

When a further non-active ingredient is present in the composition of the present invention, it is preferably selected from bait substances, antifoaming agents, buffers, pH modifiers, antioxidants, biostimulants, preservatives (e.g. mould inhibitors), binding agents, bird deterrents (e.g. dyes), animal repellents, wetting agents, odour masking agents, UV protecting agents and mixtures thereof. When present, the amount of non-active ingredient present in the composition (e.g. in ready to use form) of the present invention is preferably 0.01-5 % w/v and more preferably 0.05-2 % w/v.

Preferred compositions of the present invention, however, consist essentially of, and more preferably, consist of maltodextrin, surfactant and water.

A method for making a pesticidal composition is also described, comprising mixing: maltodextrin, surfactant, and water. Any conventional mixing method may be used, e.g. stirrer, shaker etc. Optionally the mixture is heated to improve the dissolution.

Preferred methods further comprise purifying maltodextrin prior to its incorporation into the composition. In particularly preferred methods the maltodextrin is first purified to remove at least some, and more preferably substantially all, of the oligosaccharides having a chain length of 8-20 from the oligosaccharide mixture. In other further preferred methods the maltodextrin is purified to remove at least some, and more preferably substantially all, of the monomers and dimers present in the oligosaccharide mixture. Any conventional purification technique may be used, e.g. centrifugal separation, chromatography etc.

Thus a preferred method comprises:

- purifying maltodextrin to remove oligosaccharides having a chain length of 8-20;
- preferably purifying maltodextrin to remove monomers and dimers; and
- mixing the purified maltodextrin with surfactant and water.

A still further preferred method of the invention comprises:

- partially hydrolysing a starch selected from potato starch, corn starch and rice starch to obtain maltodextrin;
- purifying the maltodextrin to remove oligosaccharides having a chain length of 8-20;
- preferably purifying the maltodextrin to remove monomers and dimers; and
- mixing the purified maltodextrin with surfactant and water.

In particularly preferred methods, partial hydrolysis of starch is carried out using acid, enzymes, bacteria or a combination thereof. Enzyme hydrolysis is generally preferred as it allows more control over the hydrolysis reaction. For instance, an enzyme with specificity for certain linkages may be chosen. Regardless of the type of hydrolysis employed, preferably the starch is first dispersed in water and allowed to swell prior to carrying out the hydrolysis reaction.

The present invention provides the use of the composition hereinbefore described as a pesticide. The compositions of the invention may be used as a pesticide in an agricultural or non-agricultural environment, e.g. as a

crop pesticide. Examples of non-agricultural uses include control of pests in stored grains, beans and other foodstuffs as well as in textiles (e.g. clothing and carpets), pest control in ornamental plants, forests, and on turf such as lawns, golf courses and pastures and pest control in houses (e.g. in wooden parts) and other buildings and structure, e.g. sheds, decks, fencing etc.

Preferably, however, the composition of the invention is used as a pesticide in agriculture. Preferably the composition of the invention is used as a plant pesticide and still more preferably as a crop plant pesticide. The crop may be edible or non-edible. Examples of crops that may be protected using the compositions of the invention include potatoes, sweet potatoes, grain, cereals, fruits, vegetables, pulses, legumes, brassicas, beets (e.g. sugar beets), ornamental flowering crops and ornamental non-flowering crops. Certain preferred crops include any solanaceae (e.g. tomato, potato, tobacco, aubergine, peppers), any cereal or grain crops (e.g. barley, wheat, oats, triticale, maize, rice, rye, adlay millet, sorghum, millet, teff, fonio or spelt), any leguminous crops (e.g. pea, chickpea, common bean, soybean, cowpea, lentil, alfalfa, peanut, mung bean or groundnut), any vegetable crops (e.g. Brassicaceae, Allium family, cucurbit family, carrot or lettuce), any Malvaceae (e.g. cotton), and any ornamental flowering crops (e.g. chrysanthemum, carnation or rose). Especially preferred crops are selected from tomato, cocoa, citrus, pome fruit (e.g. apple), potatoes, sweet potatoes, brassicas, beets and grains, more preferably from potatoes and grain. Grains of particular interest are cereal grains, such as wheat, rice, maize, barley and oats, preferably wheat, rice and maize.

The compositions of the present invention are used as a pesticide. More preferably the compositions of the invention may be used as an insecticide or as an acaricide.

Examples of insects that may be controlled include eggs, larvae, nymphs and adults of the order Hemiptera, e.g. psyllidae and pseudococcidae, with examples being Pear psylla (*Cacopsylla pyri*), cocoa mealybugs (e.g. *Planococcoides njalensis* and *Exallomochlus hispidus,* amongst others) and aphids (e.g. Aphidoidea, where economic injurious species are colloquially known as 'greenfly' and 'blackfly', examples of which are *Myzus persicae, Aphis gossypii, Aphis fabae.* Insects of the order Thysanoptera, known as 'thrips', may also be controlled. Examples include Western Flower Thrips (*Frankliniella occidentalis*) gladiolus thrips (*Thrips simplex*) and melon thrips (*Thrips palms*)*.* Insects of the order Lepidoptera, e.g. fall armyworm (*Spodoptera frugiperda*)*,* diamondback moth (*Plutella xylostella*)*,* cotton bollworm (*Helicoverpa armigera*), European corn borer (*Ostrinia nubilalis*) may also be controlled.

Examples of Acari (mites) that may be controlled include eggs, larvae, nymphs and adults of spider mites and red mites in the family *Tetranychidae* (e.g. European red mite (Panonychus ulmi Koch), two spotted spider mite (*Tetranychus urticae* Koch), McDaniel mite (*Tetranychus mcdanieli* McGregor)); flat mites in the family Tenuipalpidae (e.g., citrus flat mite (*Brevipalpus lewisi* McGregor)); rust and bud mites in the family Eriophyidae, foliar feeding mites, i.e. dust mites in the family Epidermoptidae, follicle mites in the family Demodicidae, grain mites in the family Glycyphagidae; ticks in the family Ixodidae, commonly known as hard ticks (e.g., deer tick (*Ixodes scapularis* Say), Australian paralysis tick (*Ixodes holocyclus* Neumann), American dog tick (*Dermacentor variabilis* Say), lone star tick (*Amblyomma americanum* Linnaeus)) and ticks in the family Argasidae, commonly known as soft ticks (e.g., relapsing fever tick (*Ornithodoros turicata*), common fowl tick (*Argas radiatus*)); scab and itch mites in the families Psoroptidae, Pyemotidae, and Sarcoptidae.

The present invention therefore also provides a method of controlling pests (e.g. insects and acari), comprising applying an effective amount of a composition as hereinbefore described to an area requiring insect control, and wherein said method excludes therapeutic treatment of an animal or human body.

The compositions of the invention may be applied to an area to be treated using any conventional apparatus. Preferably, however, the composition of the invention is applied by spraying.

The present invention as hereinbefore described may be employed in any space requiring pest control. The invention may be used outdoors or indoors, in open or enclosed spaces. The present invention preferably provides the use as hereinbefore described in a field, glasshouse, cloche, polytunnel, grain bin, silo, shipping container, warehouse (e.g. a potato or grain storage warehouse, preferably a potato storage warehouse), barn or controlled environment room.

The invention will now be described by the following non-liming examples and Figures, wherein:

Figure 1 is the dose response curve for maltodextrins, maltose, dextrose and a commerically available formulation against *T. urticae;*
Figure 2 is a plot of relative % with respect to the total maltodextrin versus maltodextrin chain length for maltodextrin DE 13-17;
Figure 3 is a plot of relative % with respect to the total maltodextrin versus maltodextrin chain length for maltodextrin DE 16.5-19.5;
Figure 4 is a plot of relative % with respect to the total maltodextrin versus maltodextrin chain length for maltodextrin DP 10 to 40;
Figure 5 is a DVS isotherm plot of maltodextrin DE 13-17;
Figure 6 is a DVS isotherm plot of maltodextrin DE 16.5-19.5;
Figure 7 is a DVS isotherm plot of maltodextrin DP 10-40;
Figure 8 is the isotherm overlap from DVS analysis for maltodextrin 13-17 and DP 10-40.

## EXAMPLES

Materials

Maltodextrins, oligosaccharides, maltose and dextrose were purchased from Sigma Aldrich and CarboSynth.

Methods

### Determination method for maltodextrin content using HPLC-ELSD

The total maltodextrin content was measured using High Performance Liquid Chromatography - Evaporative Light Scattering Detector (HPLC-ELSD) according to the following method: A HPLC instrument from Waters Alliance, equipped with a Waters 2424 ELSD (45 psi, drift tube set at 60°C, nebuliser set at 95 % power and heating), was used with a ACE Excel 5 $NH_2$ (150 x 4.6 mm) column set at 30 °C and a flow rate of 1.0 ml/min. The HPLC system and data collection was controlled by Empower software. Mobile phase A was deionized water (100 %), mobile phase B was acetonitrile (100 %), the injector flush solvent was a 50:50 (v/v) solution of deionized water:acetonitrile and the pump piston back-wash/seal wash was a 90:10 (v/v) solution of deionized water:acetonitrile. The injection volume was 25 μl.

The following mobile phase gradient was used.

| Time (min) | Flow (ml/min) | Mobile Phase A (%) | Mobile Phase B (%) |
|---|---|---|---|
| **0** | 1.0 | 30 | 70 |
| **25** | 1.0 | 50 | 50 |
| **28** | 1.0 | 30 | 70 |
| **30** | 1.0 | 30 | 70 |

Deionised water was used as a diluent in all samples. Stock reference solution of maltodextrin, was prepared in duplicate (3 mg/ml). The reference maltodextrin (30 ± 2 mg) was weighed, added to a volumetric flask (10 ml) and sonicated for 2 minutes. A retention marker solution containing different sugars and oligosaccharides was prepared singularly at a concentration of 3 mg/ml. Each sugar/oligosaccharide sample was weighed (30 ± 1 mg), added to a single volumetric flask (10 ml), made up with diluent and sonicated for 2 minutes. The test samples were prepared at a concentration of 3 mg/ml. The test sample was weighed (300 ± 5 mg), added to volumetric flask (100 ml) made up with diluent and sonicated for 2 minutes.

System suitability tests were performed prior to the analysis and the following run sequence was used: A sample of blank solvent was injected once. The retention marker solution was injected once. The first working reference solution was injected five times to check repeatability. The second working reference solution was injected at different known concentrations for linearity and generation of the calibration curve for quantification. The blank sample of diluent was injected once for the carry over check and then injected again. The test samples were injected in duplicate. The second working solution was injected again at varying known concentrations in duplicate for linearity and to generate the calibration curve. The blank sample of diluent was injected once at the end of the run sequence.

The repeatability of the working reference solutions was determined. The first working reference solution was injected five times and the second working solution was injected twice. The repeatability was determined by calculating the relative standard deviation (RSD) of the main peak area. The ratio of response factors was also calculated to give the repeatability of the standard. The acceptance criterion was ≤2.0 % for RSD and between 0.95 and 1.05 for ratio of response factors.

The mean retention time of each component in the retention marker solution injection had an acceptance criteria within the range of ± 1.0 minute and RSD must be <1 %.

Maltodextrin peak area was determined as the sum of all peak areas corresponding to chain lengths of 3 to 20. Calibration curves for the quantification of maltodextrin, and its constituent oligosaccharides of different chain lengths in the test samples was generated by injecting the varying known amounts of the working reference solutions. The relevant peak area(s) (y) was plotted against the known analyte concentration (x) and then used to calculate the amount of the relevant compound in the conventional manner.

### Dynamic vapour sorption (DVS) analysis of Maltodextrins

Dynamic vapor sorption (DVS) is a gravimetric technique that measures how quickly and how much of a solvent

(water) is absorbed by a sample. It does this by varying the vapor concentration surrounding the sample and measuring the change in mass which this produces.

The main component of the DVS system is an ultra-sensitive recording microbalance capable of measuring changes in sample mass lower than 1 part in 10 million. The DVS instrument is housed in a temperature controlled incubator. This ensures high instrument baseline stability as well as accurate control of the relative humidity generation. The required vapour humidities are generated by mixing dry and saturated vapour gas flows in the correct proportions using accurate mass flow controllers. Humidity probes are situated just below the sample and reference holders to give independent verification of system performance.

In the experiment carried out a known mass of sample (i.e. maltodextrin) was weighed into a DVS pan and placed into the chamber and allowed to equilibrate at 0%RH. The temperature was fixed at 25°C. The humidity was then increased from 0-90%RH in increments of 10%RH. The mass of the sample was allowed to stabilise at each humidity condition. The humidity was subsequently reduced from 90%RH back to 0%RH. Again, the sample mass was allowed to stabilise at each step. The rate at which the material takes on moisture as well as the mass retained after the desorption cycle indicates the hygroscopicity of a material.

The sample weight change was used to plot a water isotherm which illustrates the affinity of the sample to take on water.

Example 1

The objective of this experiment was to demonstrate insecticidal/acaricidal activity based on maltodextrin chain length by comparing the dose-response curves of maltodextrins of different DE value on the spider mite, *Tetranychus urticae.* The maltodextrins were compared to monosaccharide (dextrose), disaccharide (maltose) as well as a commercially available insecticide.

Each compound listed in Table 1 below was suspended in water with 0.02% Tween 80 and diluted to 5 different concentrations ranging from 20 g/L to 1 g/L of active substance.

Table 1

| Treatment no. | Compound | Compound type |
|---|---|---|
| 1 | Water + 0.02% Tween 80 | Control |
| 2 | Dextrose | Monosaccharide |
| 3 | Maltose | Disaccharide |
| 4 | Maltodextrin DE 16.5 - 19.5 | Maltodextrin |
| 5 | Maltodextrin DE 4 - 7 | Maltodextrin |
| 6 | Commercially available product | |

Ten adult *T. urticae* were placed onto bean leaf discs, *Phaseolus vulgaris,* of 50 mm diameter. Treatments were applied onto the mites at a rate of 0.05 $ml/cm^2$ using a laboratory compressed gas atomizer. The leaf discs were left to dry under a laminar flow cabinet before being sealed with a vented lid and incubated at 25 °C, 60% RH and 16L:8D light regime. Assessment of mite mortality was conducted 24 h after treatment application.

The dose-response curves, shown in Figure 1, were estimated using the 'dose.p' function in the MASS library of R statistics and plotted using the 'predict' function. Significant differences among $LD_{50}$ values were compared using the 'comped' function in the 'drc' package.

Results

All maltodextrins demonstrated activity against *T. urticae* to some degree. The steepest dose-response curve and highest rate of mortality was seen with maltodextrin DE 16.5 - 19.5. It demonstrated a similar rate of mortality to the commercial formulation, but was active at a significantly lower dose, e.g. it achieved a mortality rate of >80 % at a lower dose. The curves of maltose and dextrose were less steep but followed the same general trajectory. Maltodextrin DE 4 - 7 demonstrated a significantly different dose-response with lower rates of mortality among *T. urticae.*

Example 2

The distribution of chain lengths in each maltodextrin was analysed by the HPLC-ELSD method described

above. The results are shown in Table 2 below and in Figures 2-4.

Table 2

| Chain length | Percentage Distribution of Chain lengths (%) | | | | | |
|---|---|---|---|---|---|---|
| | Maltrodextrin DE 13-17 | | Maltodextrin DE 16.5-19.5 | | Maltodextrin DP 10-40 | |
| | All chains | Wrt total maltodextrin | All chains | Wrt total maltodextrin | All chains | Wrt total maltodextrin |
| 1 (dextrose) | 1.7 | NA | 1.9 | NA | 0.8 | NA |
| 2 (maltose) | 9.0 | | 9.2 | | 1.6 | |
| 3 | 15.2 | 17.0 | 15.4 | 17.3 | 1.7 | 1.8 |
| 4 | 9.6 | 10.8 | 10.1 | 11.3 | 2.0 | 2.0 |
| 5 | 8.7 | 9.7 | 8.7 | 9.8 | 2.9 | 3.0 |
| 6 | 20.9 | 23.4 | 21.4 | 24.1 | 3.3 | 3.4 |
| 7 | 18.4 | 20.6 | 18.3 | 20.6 | 2.9 | 3.0 |
| 8 | 5.8 | 6.5 | 5.4 | 6.1 | 2.6 | 2.6 |
| 9 | 3.1 | 3.4 | 2.8 | 3.2 | 2.5 | 2.6 |
| 10 | 2.1 | 2.4 | 1.9 | 2.1 | 2.3 | 2.4 |
| 11 | 1.7 | 1.8 | 1.5 | 1.7 | 1.9 | 1.9 |
| 12 | 1.4 | 1.5 | 1.2 | 1.4 | 1.7 | 1.8 |
| 13 | 1.1 | 1.2 | 1.0 | 1.1 | 1.1 | 1.2 |
| 14 | 0.7 | 0.8 | 0.7 | 0.8 | 0.8 | 0.8 |
| 15 | 0.5 | 0.5 | 0.4 | 0.4 | 0.6 | 0.6 |
| 16 | 0.2 | 0.2 | 0.2 | 0.2 | 0.4 | 0.4 |
| 17 | - | - | - | - | 0.3 | 0.3 |
| Unknown length | - | - | - | - | 70.5 | 72.2 |

A comparison of some of the key data from the above table is provided in Table 3 below.

Table 3

| | Maltodextrin DE 13-17 | Maltodextrin DE 16.5-19.5 | Maltodextrin DP 10 to 40 |
|---|---|---|---|
| % of chain length 3-7 wrt to chain length 3-20 | 81.5 | 83.1 | 13.2 |
| % of chain length 3-7 wrt to all chains | 72.8 | 73.9 | 12.9 |
| % of chain length 3 wrt to chain length 3-20 | 15.2 | 17.3 | 1.8 |
| % of chain length 4 wrt to chain length 3-20 | 9.6 | 11.3 | 2.0 |
| % of chain length 5 wrt to chain length 3-20 | 8.7 | 9.8 | 3.0 |
| % of chain length 6 wrt to chain length 3-20 | 20.9 | 24.1 | 3.4 |
| % of chain length 7 wrt to chain length 3-20 | 18.4 | 20.6 | 3.0 |

The HPLC-ELSD data show that maltodextrin DE 13-17 and DE 16.5-19.5 are similar in terms of their distribution of oligosaccharide chain lengths. In contrast maltodextrin DE 13-17 and DE 16.5-19.5 are quite different in their distribution of chain lengths compared to maltodextrin DP 10-40. Maltodextrin DE 13-17 and DE 16.5-19.5 each have a much higher percentage of shorter oligosaccharide chain lengths (i.e. 3-7) compared to maltodextrin DP 10-40. Additionally the maltodextrin DE 13-17 and DE 16.5-19.5 were found to be completely lacking the longer chain lengths present in maltodextrin DP 10-40, i.e. 17+

Example 3

The maltodextrins were analysed by DVS, according to the method described above, to compare the propensity of each of the maltodextrins to take up moisture under different humidity conditions. A single sorption/desorption cycle was used and the mass change was plotted against relative humidity (%). The results are shown in Table 4 below and in Figures 5 to 8.

Figure 5, the DVS isotherm plot for maltodextrin DE 13-17, exhibits two distinct rates of moisture uptake, where a faster uptake was observed from the sample above 50% RH. Upon completion of the desorption cycle, the sample was observed to have deliquesced. Figure 6, the DVS isotherm plot for maltodextrin DE 16.5-19.5, exhibits a similar curve. Figure 7, the DVS isotherm plot for maltodextrin DP 10-40, shows a sharp increase in mass between 0 and 10 % RH and thereafter the sample mass increases more slowly to a maximum of 27 %. There is a slight hysteresis observed upon desorption, however, the sample mass recovers close to the starting mass and no observation of deliquescence was recorded. The difference in the behaviour of the maltodextrins in DVS analysis can be seen in Figure 8 which shows the isotherm overlap for maltodextrin 13-17 and DP 10-40

Table 4

| Target %RH | Sorption Mass Change (%) | | |
|---|---|---|---|
| | Maltodextrin 13-17 | Maltodextrin 16.5-19.5 | Maltodextrin DP 10-40 |
| 0.0 | 0.0 | 0.0 | 0.0 |
| 10.0 | 1.2 | 2.3 | 4.2 |
| 20.0 | 2.3 | 3.3 | 6.3 |
| 30.0 | 3.0 | 3.8 | 8.0 |
| 40.0 | 3.5 | 4.3 | 9.7 |
| 50.0 | 4.0 | 5.9 | 11.4 |
| 60.0 | 6.1 | 10.1 | 13.6 |
| 70.0 | 12.6 | 14.3 | 16.2 |
| 80.0 | 19.2 | 20.3 | 19.3 |
| 90.0 | 31.8 | 34.0 | 27.2 |

From a comparison of the datasets it was concluded that maltodextrin DE 13-17 and DE 16.5-19.5, which each contain a higher proportion of oligosaccharides having a chain length of 3-7 compared to maltodextrin DP 10-40, demonstrates an overall higher mass gain and are observed to undergo deliquescence indicating a higher propensity for moisture uptake. The water uptake occurs rapidly above 60 % RH. In contrast for maltodextrin DP 10-40, which contains a lower proportion of oligosaccharides having a chain length of 3-7, moisture uptake is higher at lower RH % and the sample returns close to its starting mass upon desorption with no evidence of deliquescence.

Conclusion

The results of the dose response study confirm that maltodextrin with a relatively high DE are more active against spider mites and achieve high mortality rates at lower doses. The maltodextrin with a lower DE exhibited relatively less activity and achieved a significantly lower mortality rate even at the highest dose at which it was used.

The HPLC analysis of the composition of the maltodextrins confirmed that maltodextrin DE 13-17 and DE 16.5-19.5 each have a relatively higher proportion of oligosaccharides having a chain length of 3-7 compared to maltodextrin DP 10-40. The DVS analyses of maltodextrin DE 13-17, DE 16.5-19.5 and DP 10-40 showed that maltodextrin DE 13-17 and DE 16.5-19.5 have a greater propensity to absorb more water and at a faster rate than maltodextrin DP 10-40. The results also showed that maltodextrin with a higher proportion of relatively short chain oligosaccharides (i.e. 3-7) underwent deliquescence in the process. Without wishing to be bound by theory, it is thought that the greater activity of maltodextrin DE 16.5-19.5 against *T. urticae* compared to maltodextrin DE 4-7 is attributable to the fact that the oligosaccharides having a chain length of 3-7 present therein in a relatively higher proportion are more active than the longer chain oligosaccharides (i.e. chain lengths of 8+ ) and that this may be due to a mechanism, wherein the oligosaccharides having a chain length of 3-7 effectively absorb moisture from spiders causing them to dehydrate. The fact that the oligosaccharides having a chain length of 3-7 undergo deliquesence in the process means it is irreversible so

no equilibrium is reached.

## Claims

1. Use of a composition comprising:

   (i) maltodextrin;
   (ii) surfactant; and
   (iii) water,
   wherein said maltodextrin comprises at least 75 % oligosaccharides having a chain length of 3 to 7 based on the overall oligosaccharide mixture having chains of length 3 to 20, as a pesticide,
   and wherein said use excludes therapeutic treatment of an animal or human body.

2. Use as claimed in claim 1, wherein said maltodextrin comprises 80 to 95 % oligosaccharides having a chain length of 3-7 based on the overall oligosaccharide mixture having chains of length 3-20.

3. Use as claimed in claim 1 or 2, wherein said maltodextrin comprises a mixture of oligosaccharides having a chain length of 3, 4, 5, 6 and 7.

4. Use as claimed in any preceding claim, wherein said maltodextrin comprises: 10-25 % and still more preferably 15-20 % of oligosaccharide having a chain length of 3 based on the overall oligosaccharide mixture having chains of length 3-20.

5. Use as claimed in any preceding claim, wherein said maltodextrin comprises 7.5-25 % and still more preferably 10-15 % oligosaccharide having a chain length of 4 based on the overall oligosaccharide mixture having chains of length 3-20.

6. Use as claimed in any preceding claim, wherein said maltodextrin comprises 7.5-25 % and still more preferably 7.5-15 % oligosaccharide having a chain length of 5 based on the overall oligosaccharide mixture having chains of length 3-20.

7. Use as claimed in any preceding claim, wherein said maltodextrin comprises 10-30 % and still more preferably 15-25 % oligosaccharide having a chain length of 6 based on the overall oligosaccharide mixture having chains of length 3-20.

8. Use as claimed in any preceding claim, wherein said maltodextrin comprises 10-25 % and still more preferably 15-20 % oligosaccharide having a chain length of 7 based on the overall oligosaccharide mixture comprising chains of length 3-20.

9. Use as claimed in any preceding claim, wherein said maltodextrin comprises 0-25 % and still more preferably 0-20 % of oligosaccharides having a chain length of 8-20 based on the overall oligosaccharide mixture having chains of length 3-20.

10. Use as claimed in any preceding claim, wherein said maltodextrin comprises 0-5 % of oligosaccharides and still more preferably 0-3 % oligosaccharides having a chain length of 13-20 based on the overall oligosaccharide mixture having chains of length 3-20.

11. Use as claimed in any preceding claim, wherein said maltodextrin has a dextrose equivalent of 12-36, and still more preferably a dextrose equivalent of 20-36.

12. Use as claimed in any preceding claim, wherein said maltodextrin is the sole active ingredient.

13. Use as claimed in any preceding claim, wherein said surfactant is a non-ionic surfactant, preferably a polyoxyethylene fatty ester.

14. Use as claimed in any preceding claim, comprising 260-435 g/L of maltodextrin.

15. Use as claimed in any preceding claim, wherein said composition is in the form of a solution.

16. Use as claimed in any one of claims 1-15 as an insecticide or an acaricide.

17. Use as claimed in any one of claims 1-16, wherein said use is in agriculture, preferably wherein said use is as a crop plant pesticide, or said use as a pesticide is to:

control pests in stored grains, beans and other foodstuffs;
control pests in textiles (e.g. clothing and carpets);
control pests in ornamental plants, forests, and on turf such as lawns, golf courses and pastures; or
control pests in houses (e.g. in wooden parts) and other buildings and structures, e.g. sheds, decks, and fencing.

18. A method of controlling pests, comprising applying an effective amount of a composition as defined in claims 1-15 to an area requiring insect control, and wherein said method excludes therapeutic treatment of an animal or human body.

19. A method according to claim 16, wherein said area requiring insect and/or mite control is in a field, glasshouse, cloche, polytunnel, grain bin, silo, shipping container, warehouse (e.g. a potato or grain storage warehouse, preferably a potato storage warehouse), barn or controlled environment room.

**Patentansprüche**

1. Verwendung einer Zusammensetzung, umfassend:

(i) Maltodextrin;
(ii) Tensid und
(iii) Wasser,
wobei das Maltodextrin mindestens 75 % Oligosaccharide mit einer Kettenlänge von 3 bis 7, bezogen auf das gesamte Oligosaccharidgemisch mit Ketten der Länge 3 bis 20, als Pestizid umfasst,
und wobei die Verwendung eine therapeutische Behandlung eines tierischen oder menschlichen Körpers ausschließt.

2. Verwendung nach Anspruch 1, wobei das Maltodextrin 80 bis 95 % Oligosaccharide mit einer Kettenlänge von 3-7, bezogen auf das gesamte Oligosaccharidgemisch mit Ketten der Länge 3-20, umfasst.

3. Verwendung nach Anspruch 1 oder 2, wobei das Maltodextrin ein Gemisch aus Oligosacchariden mit einer Kettenlänge von 3, 4, 5, 6 und 7 umfasst.

4. Verwendung nach einem vorhergehenden Anspruch, wobei das Maltodextrin umfasst:
10-25 % und noch bevorzugter 15-20 % Oligosaccharid mit einer Kettenlänge von 3, bezogen auf das gesamte Oligosaccharidgemisch mit Ketten der Länge 3-20.

5. Verwendung nach einem vorhergehenden Anspruch, wobei das Maltodextrin 7,5-25 % und noch bevorzugter 10 bis 15 % Oligosaccharid mit einer Kettenlänge von 4, bezogen auf das gesamte Oligosaccharidgemisch mit Ketten der Länge 3-20, umfasst.

6. Verwendung nach einem vorhergehenden Anspruch, wobei das Maltodextrin 7,5-25 % und noch bevorzugter 7,5-15 % Oligosaccharid mit einer Kettenlänge von 5, bezogen auf das gesamte Oligosaccharidgemisch mit Ketten der Länge 3 bis 20, umfasst.

7. Verwendung nach einem vorhergehenden Anspruch, wobei das Maltodextrin 10-30 % und noch bevorzugter 15-25 % Oligosaccharid mit einer Kettenlänge von 6, bezogen auf das gesamte Oligosaccharidgemisch mit Ketten der Länge 3-20, umfasst.

8. Verwendung nach einem vorhergehenden Anspruch, wobei das Maltodextrin 10-25 % und noch bevorzugter 15-20 % Oligosaccharid mit einer Kettenlänge von 7, bezogen auf das gesamte Oligosaccharidgemisch umfassend Ketten der Länge 3-20, umfasst.

9. Verwendung nach einem vorhergehenden Anspruch, wobei das Maltodextrin 0-25 % und noch bevorzugter 0-20 % Oligosaccharide mit einer Kettenlänge von 8-20, bezogen auf das gesamte Oligosaccharidgemisch mit Ketten der Länge 3-20, umfasst.

10. Verwendung nach einem vorhergehenden Anspruch, wobei das Maltodextrin 0-5 % Oligosaccharide und noch bevorzugter 0-3 % Oligosaccharide mit einer Kettenlänge von 13-20, bezogen auf das gesamte Oligosaccharidgemisch mit Ketten der Länge 3-20, umfasst.

11. Verwendung nach einem vorhergehenden Anspruch, wobei das Maltodextrin ein Dextroseäquivalent von 12-36 und noch bevorzugter ein Dextroseäquivalent von 20-36 aufweist.

12. Verwendung nach einem vorhergehenden Anspruch, wobei das Maltodextrin der einzige Wirkstoff ist.

13. Verwendung nach einem vorhergehenden Anspruch, wobei das Tensid ein nichtionisches Tensid, vorzugsweise ein Polyoxyethylenfettsäureester, ist.

14. Verwendung nach einem vorhergehenden Anspruch, umfassend 260-435 g/l Maltodextrin.

15. Verwendung nach einem vorhergehenden Anspruch, wobei die Zusammensetzung in Form einer Lösung vorliegt.

16. Verwendung nach einem der Ansprüche 1-15 als Insektizid oder Akarizid.

17. Verwendung nach einem der Ansprüche 1-16, wobei die Verwendung in der Landwirtschaft erfolgt, vorzugsweise wobei die Verwendung als Pestizid für Kulturpflanzen ist, oder wobei die Verwendung als Pestizid zu Folgendem dient:

    Schädlingsbekämpfung in gelagertem Getreide, gelagerten Bohnen und anderen gelagerten Lebensmitteln;
    Schädlingsbekämpfung in Textilien (z.B. Kleidung und Teppichen);
    Schädlingsbekämpfung in Zierpflanzen, Wäldern und auf Rasenflächen wie Rasenplätzen, Golfplätzen und Weiden; oder
    Schädlingsbekämpfung in Häusern (z.B. in Holzteilen) und anderen Gebäuden und Konstruktionen, z.B. Schuppen, Terrassen und Umzäunungen.

18. Verfahren zur Schädlingsbekämpfung, umfassend das Aufbringen einer wirksamen Menge einer Zusammensetzung, wie in den Ansprüchen 1-15 definiert, auf eine Fläche, die einer Insektenbekämpfung bedarf, und wobei das Verfahren eine therapeutische Behandlung eines tierischen oder menschlichen Körpers ausschließt.

19. Verfahren nach Anspruch 16, wobei die Fläche, die einer Insekten- und/oder Milbenbekämpfung bedarf, sich auf einem Feld, in einem Gewächshaus, einer Glockenhaube, einem Folientunnel, einem Getreidesilo, einem Silo, einem Versandcontainer, einem Lagerhaus (z.B. einem Kartoffel- oder Getreidelagerhaus, vorzugsweise einem Kartoffellagerhaus), einer Scheune oder einem Raum mit kontrollierter Umgebung befindet.

## Revendications

1. Utilisation d'une composition comprenant :

    (i) une maltodextrine;
    (ii) un tensioactif; et
    (iii) de l'eau,
    dans laquelle ladite maltodextrine comprend au moins 75 % d'oligosaccharides ayant une longueur de chaîne de 3 à 7 sur la base du mélange total d'oligosaccharides ayant des chaînes de longueur 3 à 20, en tant que pesticide, et où ladite utilisation exclut un traitement thérapeutique d'un corps animal ou humain.

2. Utilisation selon la revendication 1, dans laquelle ladite maltodextrine comprend 80 à 95 % d'oligosaccharides ayant une longueur de chaîne de 3-7 sur la base du mélange total d'oligosaccharides ayant des chaînes de longueur 3-20.

3. Utilisation selon la revendication 1 ou 2, dans laquelle ladite maltodextrine comprend un mélange d'oligosaccharides

ayant une longueur de chaîne de 3, 4, 5, 6 et 7.

4. Utilisation selon l'une quelconque des revendications précédentes, dans laquelle ladite maltodextrine comprend 10-25 % et encore plus préférablement 15-20 % d'oligosaccharides ayant une longueur de chaîne de 3 sur la base du mélange total d'oligosaccharides ayant des chaînes de longueur 3-20.

5. Utilisation selon l'une quelconque des revendications précédentes, dans laquelle ladite maltodextrine comprend 7,5-25 % et encore plus préférablement 10-15 % d'oligosaccharides ayant une longueur de chaîne de 4 sur la base du mélange total d'oligosaccharides ayant des chaînes de longueur 3-20.

6. Utilisation selon l'une quelconque des revendications précédentes, dans laquelle ladite maltodextrine comprend 7,5-25 % et encore plus préférablement 7,5-15 % d'oligosaccharides ayant une longueur de chaîne de 5 sur la base du mélange total d'oligosaccharides ayant des chaînes de longueur 3-20.

7. Utilisation selon l'une quelconque des revendications précédentes, dans laquelle ladite maltodextrine comprend 10-30 % et encore plus préférablement 15-25 % d'oligosaccharides ayant une longueur de chaîne de 6 sur la base du mélange total d'oligosaccharides ayant des chaînes de longueur 3-20.

8. Utilisation selon l'une quelconque des revendications précédentes, dans laquelle ladite maltodextrine comprend 10-25 % et encore plus préférablement 15-20 % d'oligosaccharides ayant une longueur de chaîne de 7 sur la base du mélange total d'oligosaccharides comprenant des chaînes de longueur 3-20.

9. Utilisation selon l'une quelconque des revendications précédentes, dans laquelle ladite maltodextrine comprend 0-25 % et encore plus préférablement 0-20 % d'oligosaccharides ayant une longueur de chaîne de 8-20 sur la base du mélange total d'oligosaccharides ayant des chaînes de longueur 3-20.

10. Utilisation selon l'une quelconque des revendications précédentes, dans laquelle ladite maltodextrine comprend 0-5 % d'oligosaccharides et encore plus préférablement 0-3 % d'oligosaccharides ayant une longueur de chaîne de 13-20 sur la base du mélange total d'oligosaccharides ayant des chaînes de longueur 3-20.

11. Utilisation selon l'une quelconque des revendications précédentes, dans laquelle ladite maltodextrine a un équivalent de dextrose de 12-36 et encore plus préférablement un équivalent de dextrose de 20-36.

12. Utilisation selon l'une quelconque des revendications précédentes, dans laquelle ladite maltodextrine est le seul ingrédient actif.

13. Utilisation selon l'une quelconque des revendications précédentes, dans laquelle ledit tensioactif est un tensioactif non ionique, de préférence un ester gras de polyoxyéthylène.

14. Utilisation selon l'une quelconque des revendications précédentes, comprenant 260-435 g/l de maltodextrine.

15. Utilisation selon l'une quelconque des revendications précédentes, dans laquelle ladite composition est sous la forme d'une solution.

16. Utilisation selon l'une quelconque des revendications 1-15 en tant qu'insecticide ou acaricide.

17. Utilisation selon l'une quelconque des revendications 1-16, où ladite utilisation est dans l'agriculture, de préférence où ladite utilisation est en tant que pesticide pour des plantes cultivées, ou ladite utilisation en tant que pesticide est pour:

    lutter contre les nuisibles dans des graines, des haricots et d'autres denrées alimentaires stockées;
    lutter contre les nuisibles dans des textiles (par ex. vêtements et tapis);
    lutter contre les nuisibles dans des plantes ornementales, des forêts et sur un gazon tel que des pelouses, des parcours de golf et des pâturages; ou
    lutter contre les nuisibles dans des maisons (par ex. dans des parties en bois) et d'autres immeubles et structures, par ex. remises, planchers et clôtures.

18. Procédé pour lutter contre les nuisibles, comprenant l'application d'une quantité efficace d'une composition telle que définie dans les revendications 1-15 sur une zone nécessitant une lutte contre des insectes, et où ledit procédé exclut

un traitement thérapeutique d'un corps animal ou humain.

19. Procédé selon la revendication 16, dans lequel ladite zone nécessitant une lutte contre des insectes et/ou des acariens est dans un champ, une serre, une cloche, un tunnel plastique, une cellule à grains, un silo, un conteneur d'expédition, un entrepôt (par ex. un entrepôt de stockage de pommes de terre ou de grains, de préférence un entrepôt de stockage de pommes de terre), une grange ou une pièce à environnement contrôlé.

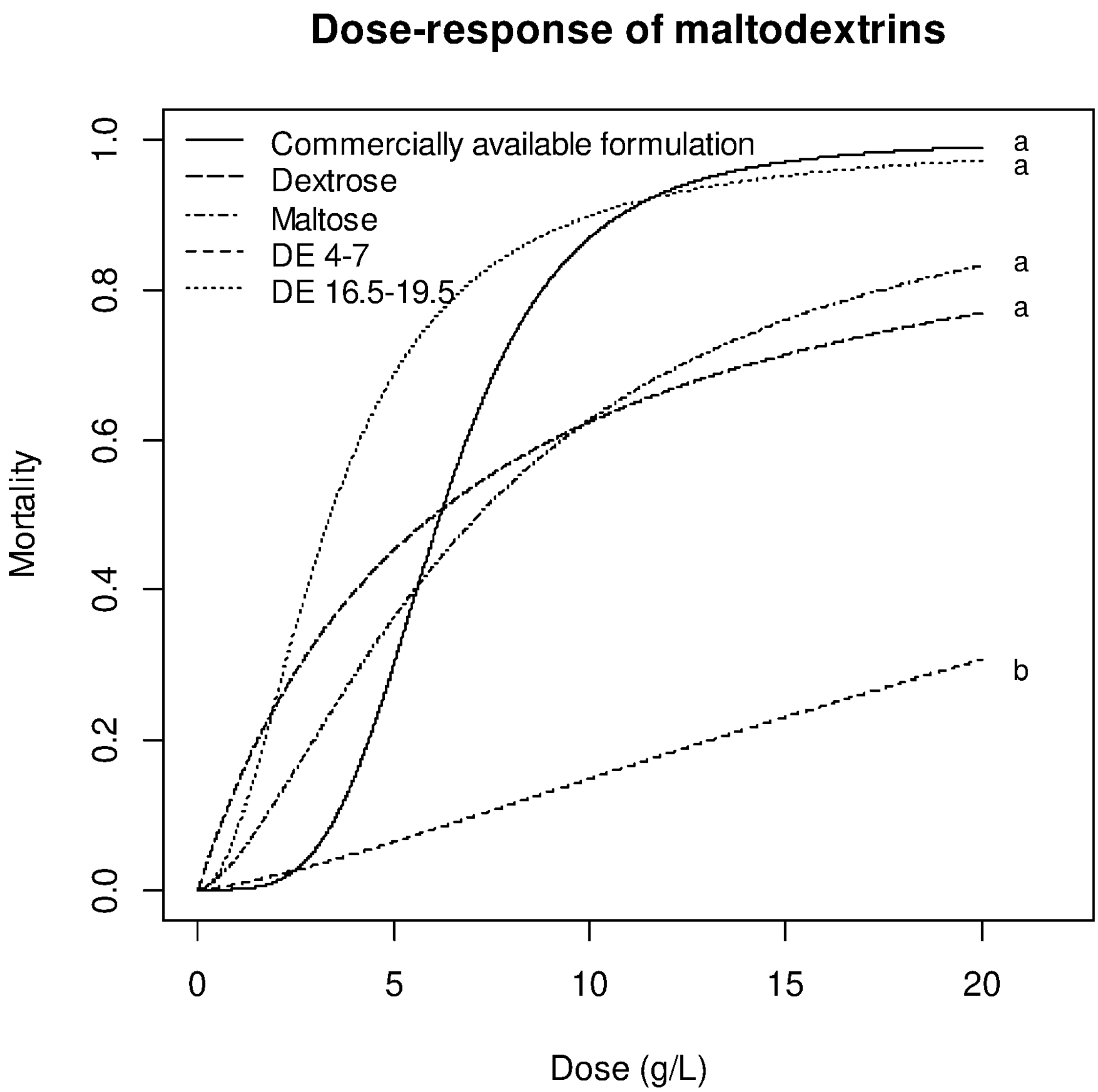
Dose-response of maltodextrins
Commercially available formulation
Dextrose
Maltose
DE 4-7
DE 16.5-19.5
Mortality
0.0
0.2
0.4
0.6
0.8
1.0
0
5
10
15
20
Dose (g/L)
a
a
a
a
b

Figure 1

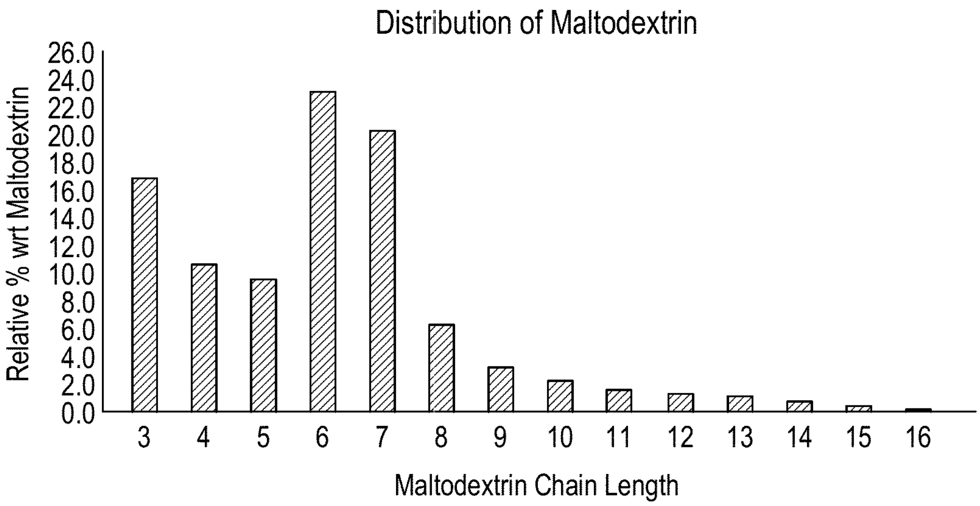


Fig. 2

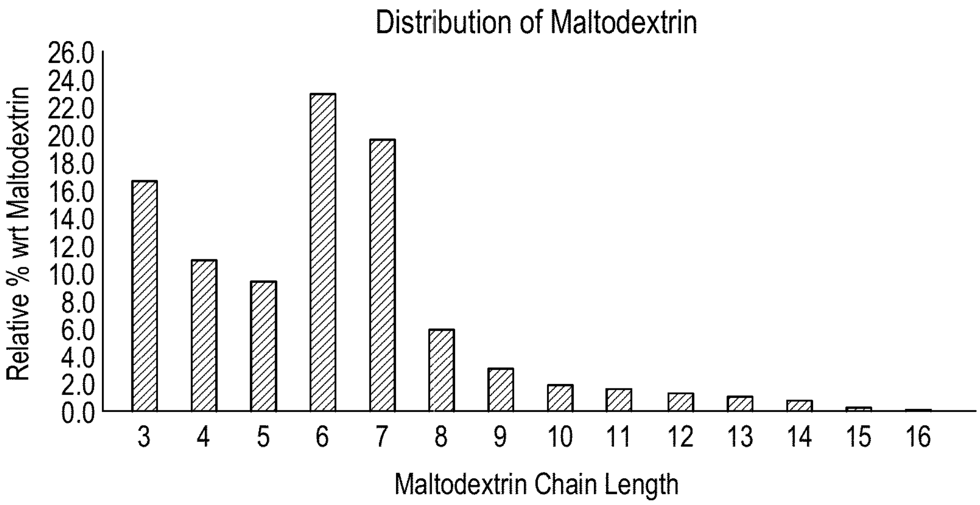


Fig. 3

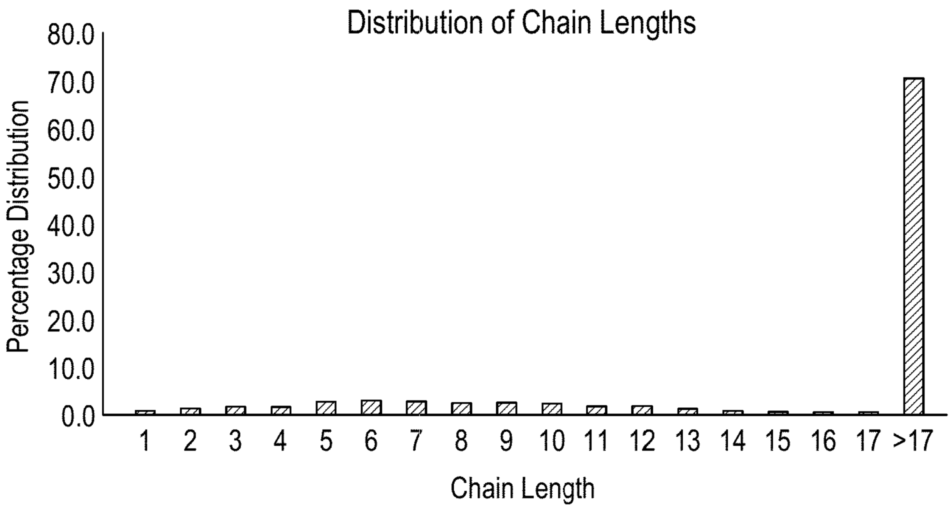


Fig. 4

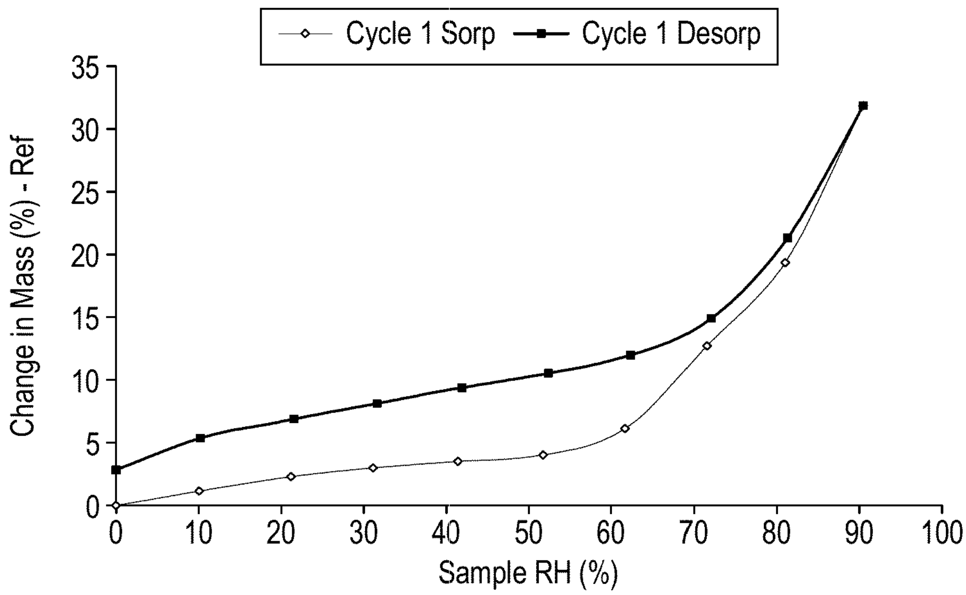
Cycle 1 Sorp
Cycle 1 Desorp
Change in Mass (%) - Ref
Sample RH (%)
0
5
10
15
20
25
30
35
0
10
20
30
40
50
60
70
80
90
100

Fig. 5

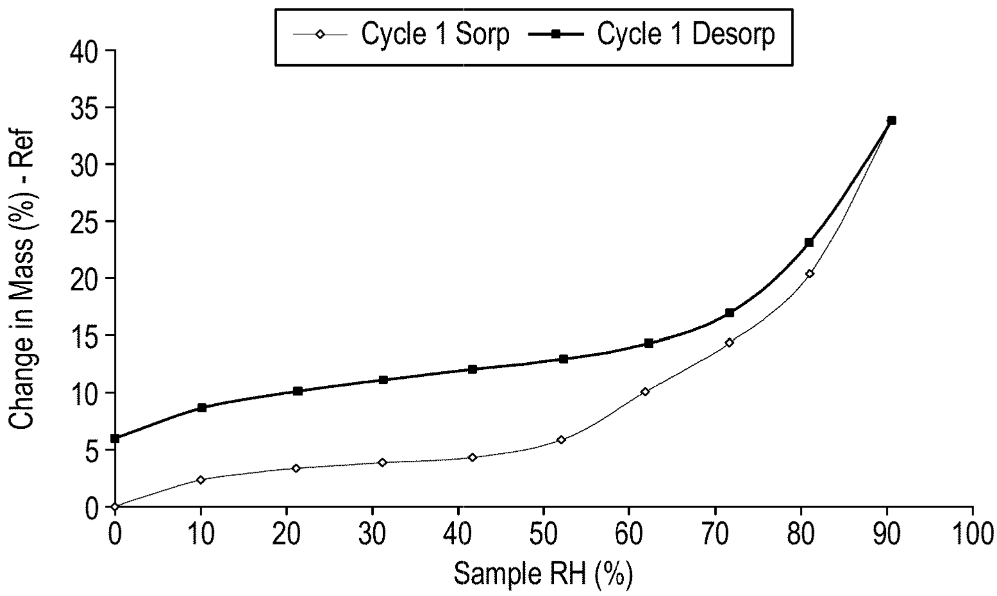
Cycle 1 Sorp
Cycle 1 Desorp
Change in Mass (%) - Ref
Sample RH (%)
0
5
10
15
20
25
30
35
40
0
10
20
30
40
50
60
70
80
90
100

Fig. 6

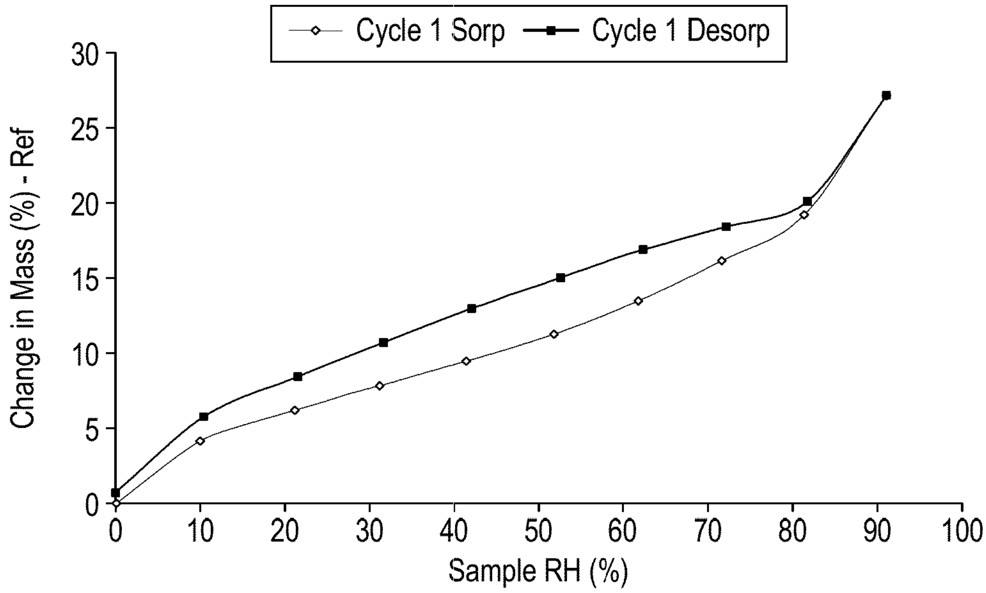
Cycle 1 Sorp
Cycle 1 Desorp
Change in Mass (%) - Ref
Sample RH (%)
0
5
10
15
20
25
30
0
10
20
30
40
50
60
70
80
90
100

Fig. 7

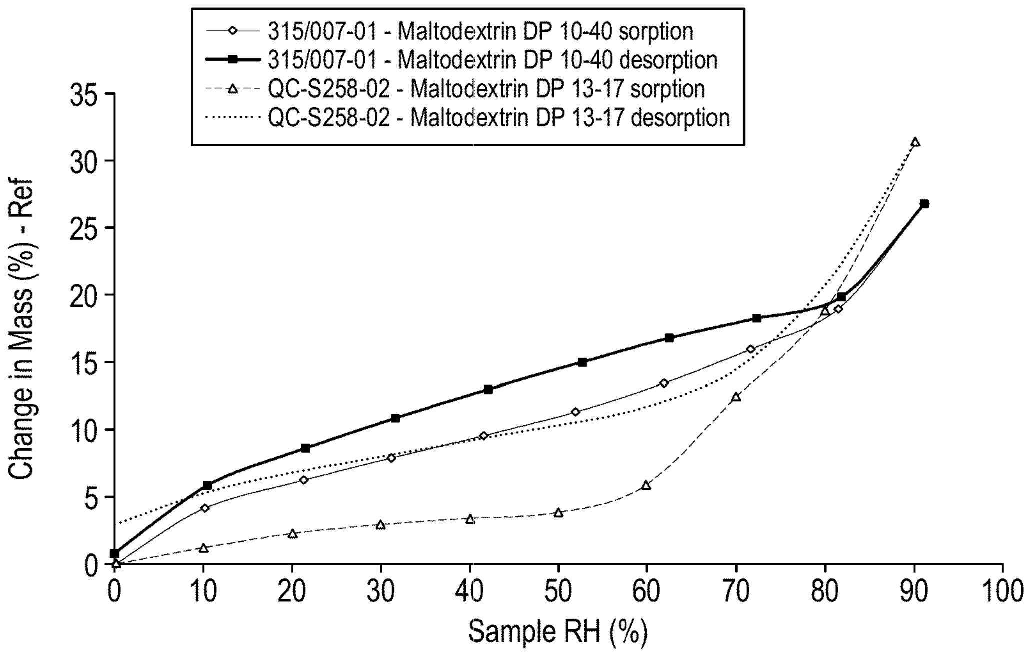
315/007-01 - Maltodextrin DP 10-40 sorption
315/007-01 - Maltodextrin DP 10-40 desorption
QC-S258-02 - Maltodextrin DP 13-17 sorption
QC-S258-02 - Maltodextrin DP 13-17 desorption
Change in Mass (%) - Ref
Sample RH (%)
0
5
10
15
20
25
30
35
0
10
20
30
40
50
60
70
80
90
100

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2010081815 A1
- WO 2016131853 A1
- WO 2017024165 A1
- RU 2194420 C1
- US 5756140 A
- US 2011224127 A1
- US 2011294864 A1
- DE 165195


### Non-patent literature cited in the description


- Conclusion on the peer review of the pesticide risk assessment of the active substance maltodextrin : Peer review of the pesticide risk assessment of the active substance maltodextrin. *THE EFSA JOURNAL*, 01 January 2013, vol. 11 (1), ISSN 1831-4732, 3007